# EUROPEAN PATENT SPECIFICATION

(11) **EP 4 583 284 B1**
(45) Date of publication and mention of the grant of the patent: **14.10.2026**
(21) Application number: 24849535.0
(22) Date of filing: 29.07.2024
(51) Int. Cl.: H01M 50/258, H01M 50/211, H01M 10/6556, H01M 10/613

(54) **BATTERY MODULE AND BATTERY PACK COMPRISING SAME**
BATTERIEMODUL UND BATTERIEPACK DAMIT
MODULE DE BATTERIE ET BLOC-BATTERIE COMPRENANT CELUI-CI

(30) Priority: 03.08.2023 KR 20230101567
(43) Date of publication of application: 09.07.2025
(73) Proprietor: LG Energy Solution, Ltd., Seoul 07335 (KR)
(72) Inventor: KIM, Gwan Woo, Daejeon 34122 (KR); JANG, Sung Hwan, Daejeon 34122 (KR); KIM, Da Young, Daejeon 34122 (KR); KIM, Jae Wook, Daejeon 34122 (KR)
(74) Representative: BCKIP Part mbB
(86) International application number: PCT/KR2024/010994
(87) International publication number: WO 2025/028966

(56) References cited:
- CN-A- 113 410 546
- JP-A- 2016 033 914
- KR-A- 20140 140 678
- KR-A- 20220 027 160
- KR-A- 20220 060 715
- US-A1- 2019 237 720
- US-A1- 2019 283 562
- US-A1- 2023 136 762

## Description

### [Technical Field]

The present invention relates to a battery pack including a battery module.

This application claims the benefit of priority based on Korean Patent Application No. 10-2023-0101567, filed on August 3, 2023.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable. US2019/283562A1 discloses a housing assembly for electrical storage means for a drive of an electrically powered motor vehicle. It comprises a tray arrangement, into which electrical storage means can be inserted, and a cover arrangement, which can be placed on the tray arrangement and can be releasably connected thereto, wherein the tray arrangement and/ or the cover arrangement has a first formed part and a second formed part, each having a base and side walls; said first formed part and said second formed part being arranged adjacent to each other and joined together in a longitudinally extending joining region.

### [Disclosure]

### [Technical Problem]

The present invention is directed to providing a battery pack including a battery module.

### [Technical Solution]

The invention is defined by the appended independent claim 1. Additional embodiments are defined in the dependent claims. An aspect of the present disclosure provides a battery module including: a plurality of battery cell assemblies each including a plurality of battery cells; a lower case including a plurality of first pocket parts spaced apart from each other in a first direction and a first connection part extending between two adjacent first pocket parts among the plurality of first pocket parts, in which each of the plurality of first pocket parts includes a lower accommodation space for accommodation of a lower part of a corresponding battery cell assembly among the plurality of battery cell assemblies and the plurality of first pocket parts and the first connection part are integrally formed; and an upper case including a plurality of second pocket parts spaced apart from each other in the first direction and a second connection part extending between two adjacent second pocket parts among the plurality of second pocket parts, in which each of the plurality of second pocket parts includes an upper accommodation space for accommodation of an upper part of a corresponding battery cell assembly among the plurality of battery cell assemblies and the plurality of second pocket parts and the second connection part are integrally formed. The lower case and the upper case are coupled to each other by coupling the first connection part and the second connection part.

In example embodiments, the first connection part may extend from one end of each of the first pocket parts to another end of each of the first pocket parts in a second direction crossing the first direction, and the second connection part may extend from one end of each of the second pocket parts to another end of each of the second pocket parts in the second direction.

In example embodiments, the first connection part may include a flat upper surface, the second connection part may include a flat lower surface, and the upper surface of the first connection part may be in contact with the lower surface of the second connection part.

In example embodiments, the battery module may further include a bonding layer between the first connection part and the second connection part.

In example embodiments, the bonding layer may include a metal.

In example embodiments, the lower case may further include a first flange extending from an outermost first pocket part among the plurality of first pocket parts, the upper case may further include a second flange extending from an outermost second pocket part among the plurality of second pocket parts, and the first flange may be coupled to the second flange.

In example embodiments, the first flange may extend from one end of the outermost first pocket part to another end of the outermost first pocket part in a second direction crossing the first direction, the second flange may extend from one end of the outermost second pocket part to another end of the outermost second pocket part in the second direction, the first flange may include a flat upper surface, the second flange may include a flat lower surface, and the upper surface of the first flange may be in contact with the lower surface of the second flange.

In example embodiments, the first flange and the second flange may be coupled to each other by a metal bonding layer.

In example embodiments, each of the plurality of first pocket parts may include a first cooling channel.

In example embodiments, each of the plurality of second pocket parts may include a second cooling channel.

In example embodiments, in each of the plurality of battery cell assemblies, the plurality of battery cells may be stacked in the first direction.

Another aspect of the present disclosure provides a battery pack including a pack housing and a battery module in the pack housing. The battery module includes: a plurality of battery cell assemblies each including a plurality of battery cells; a lower case including a plurality of first pocket parts spaced apart from each other in a first direction and a first connection part extending between two adjacent first pocket parts among the plurality of first pocket parts, in which each of the plurality of first pocket parts includes a lower accommodation space for accommodation of a lower part of a corresponding battery cell assembly among the plurality of battery cell assemblies and the plurality of first pocket parts and the first connection part are integrally formed; and an upper case including a plurality of second pocket parts spaced apart from each other in the first direction and a second connection part extending between two adjacent second pocket parts among the plurality of second pocket parts, in which each of the plurality of second pocket parts includes an upper accommodation space for accommodation of an upper part of a corresponding battery cell assembly among the plurality of battery cell assemblies and the plurality of second pocket parts and the second connection part are integrally formed. The lower case and the upper case are coupled to each other by coupling the first connection part and the second connection part.

In example embodiments, the battery module may be spaced apart from a bottom plate of the pack housing, and a space may be provided between the battery module and the bottom plate of the pack housing.

In example embodiments, the pack housing may include a support structure configured to support an assembly of the first connection part and the second connection part.

In example embodiments, the lower case may further include a first flange extending from an outermost first pocket part among the plurality of first pocket parts, the upper case may further include a second flange extending from an outermost second pocket part among the plurality of second pocket parts, the first flange may be coupled to the second flange, and the pack housing may include a support structure configured to support an assembly of the first flange and the second flange.

### [Advantageous Effects]

According to example embodiments of the present disclosure, each of an upper case and a lower case that are structures for accommodating and supporting a plurality of battery cell assemblies is configured as an integrated press product to simplify a manufacturing process of a battery module and reduce manufacturing costs of the battery module. The plurality of battery cell assemblies can be accommodated in accommodation spaces provided by the upper case and the lower case to manufacture a battery module on a large scale.

According to example embodiments of the present disclosure, there is a relatively large bonding area between the lower case and the upper case to secure a wide weldable area when a welding process is performed to combine the lower case and the upper case. Accordingly, a manufacturing process of a battery module can be facilitated.

In addition, according to example embodiments of the present disclosure, there is a relatively large contact area between a battery module and a support structure of a pack housing to disperse stress to be applied to parts of the battery module and the pack housing to be fastened and reduce damage to the parts of the battery module and the pack housing to be fastened. Accordingly, the safety and reliability of a battery pack 500 can be improved.

Effects achievable from example embodiments of the present disclosure are not limited to the above-described effects, and other effects that are not described herein will be clearly derived and understood by those of ordinary skilled in the art to which the example embodiments of the present disclosure pertain from the following description.

### [Brief Description of the Drawings]

FIG. 1 is an exploded perspective view of a battery module according to example embodiments of the present disclosure.
FIG. 2 is a plan view of a battery module according to example embodiments of the present disclosure.
FIG. 3 is a cross-sectional view of a battery module according to example embodiments of the present disclosure.
FIG. 4 is an exploded view of a battery module according to example embodiments of the present disclosure.
FIG. 5 is a cross-sectional view of a bonding region between an upper case and a lower case of a battery module according to embodiments of the present disclosure.
FIG. 6 is a cross-sectional view of a battery module according to example embodiments of the present disclosure.
FIG. 7 is a cross-sectional view of a battery pack according to example embodiments of the present invention.
FIG. 8 is a schematic view of an electric vehicle in which a battery pack according to example embodiments of the present invention is mounted.

### [Best Mode]

Hereinafter, embodiments of the present disclosure will be described in detail with reference to the accompanying drawings. Before describing the embodiments, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Because embodiments of the present disclosure are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

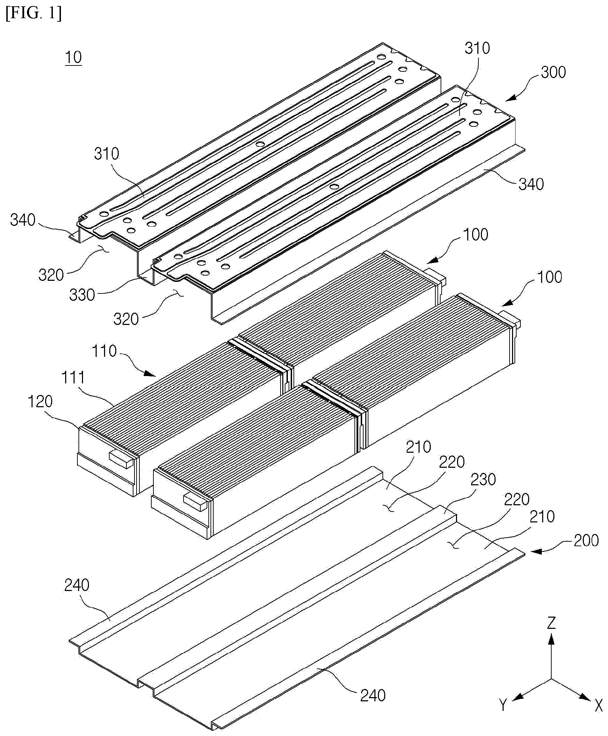

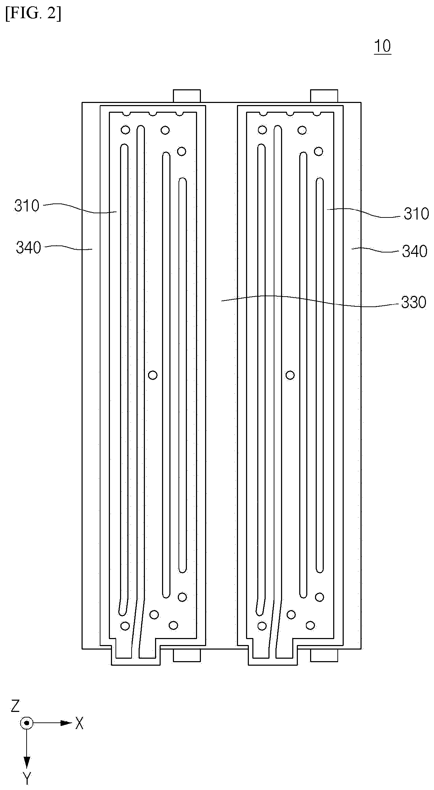

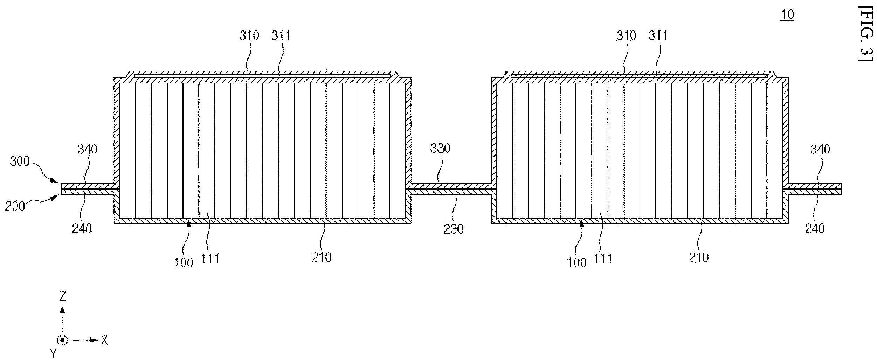

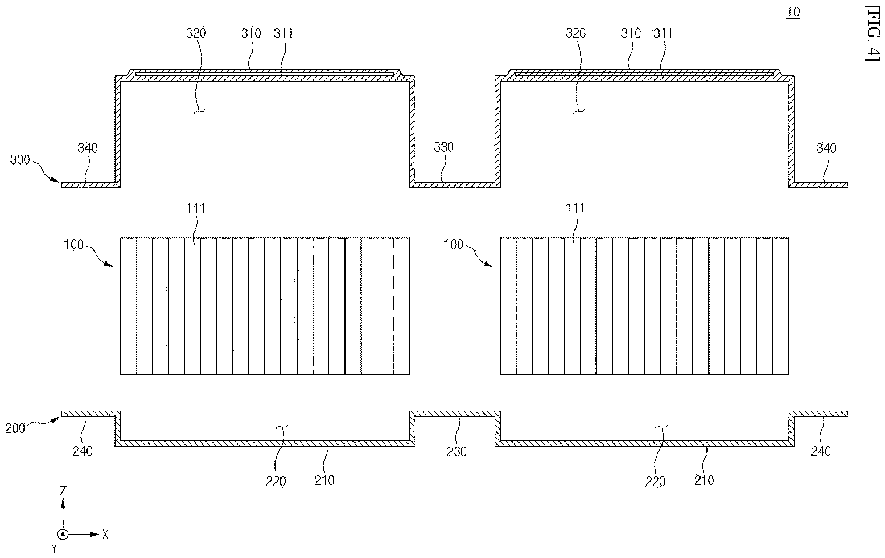

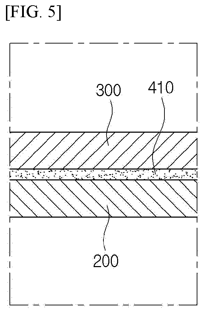

FIGS. 1 to 5 are diagrams illustrating a battery module 10 according to example embodiments of the present disclosure. FIG. 1 is an exploded perspective view of the battery module 10. FIG. 2 is a plan view of the battery module 10. FIG. 3 is a cross-sectional view of the battery module 10. FIG. 4 is an exploded view of the battery module 10. FIG. 5 is a cross-sectional view of a bonding region between an upper case 300 and a lower case 200 of the battery module 10.

Referring to FIGS. 1 to 5, the battery module 10 may include a plurality of battery cell assemblies 100, a lower case 200, and an upper case 300.

The plurality of battery cell assemblies 100 may be arranged in a first direction (an X-axis direction). The plurality of battery cell assemblies 100 may be spaced from each other in the first direction (the X-axis direction). Although an example in which the battery module 10 includes two battery cell assemblies 100 is illustrated, the number of battery cell assemblies 100 included in the battery module 10 is not limited to two. For example, the battery module 10 may include two or more battery cell assemblies 100.

Each of the battery cell assemblies 100 may include a cell block 110. The cell block 110 may include a plurality of battery cells 111. Each of the battery cells 111 is a basic unit of a lithium ion battery, i.e., a secondary battery. Each of the battery cells 111 may include an electrode assembly, an electrolyte, and a cell case. The electrode assembly provided in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one battery cell assembly 100 in the first direction (the X-axis direction). In example embodiments, in each battery cell assembly 100, the plurality of battery cells 111 may be pouch type battery cells whose length in the first direction (the X-axis direction) is less than a length thereof in a second direction (a Y-axis direction) and be stacked in the first direction (the X-axis direction).

When viewed in a plan view, the cell block 110 may have a rectangular shape whose length in the first direction (the X-axis direction) is less than a length thereof in the second direction (the Y-axis direction). The cell block 110 may have a first side surface and a second side surface that face each other in the first direction (the X-axis direction), a front surface and a rear surface that face each other in the second direction (the Y-axis direction), and an upper surface and a lower surface that face each other in a third direction (a Z-axis direction).

A bus bar frame on which bus bars are mounted may be on each of the front and rear surfaces of the cell block 110. A plurality of bus bars may be mounted on the bus bar frame on the front surface of the cell block 110, and a plurality of bus bars may be mounted on the bus bar frame on the rear surface of the cell block 110. The battery cell assembly 100 may include an end plate 120 to cover a bus bar frame connected to the front or rear surface of the cell block 110.

A bus bar may be coupled to an electrode lead of the battery cell 111. For example, the bus bar may be coupled to the electrode lead of the battery cell 111 by welding. For example, each bus bar may be an inter-bus bar coupled to electrode leads connected to different battery cells 111 belonging to the cell block 110 to electrically connect the different battery cells 111. For example, each bus bar may be a terminal bus bar for electrically coupling the battery cell assembly 100 to another external battery cell assembly 100 or another electrical device.

The battery cell assembly 100 may include a plurality of cell blocks 110. For example, as shown in FIG. 1, each of the battery cell assemblies 100 may include two cell blocks 110 arranged in the second direction (the Y-axis direction) to be electrically connected to each other.

The lower case 200 may support the plurality of battery cell assemblies 100. The lower case 200 may include a plurality of lower accommodation spaces 220 for accommodation of the plurality of battery cell assemblies 100. Each of the lower accommodation spaces 220 may accommodate a lower part of a corresponding battery cell assembly 100 among the plurality of battery cell assemblies 100. The number of the lower accommodation spaces 220 of the lower case 200 may be the same as the number of the battery cell assemblies 100. In example embodiments, the lower case 200 may be a single piece and an overall material composition thereof may be the same. For example, in order to manufacture the lower case 200, a single flat plate may be prepared and press processing may be performed on the single flat plate to cause the single flat plate to have a predetermined structure.

The lower case 200 may include a plurality of first pocket parts 210, a first connection part 230, and a first flange 240. The plurality of first pocket parts 210, the first connection part 230, and the first flange 240 may be formed in one body.

The plurality of first pocket parts 210 may be spaced apart from each other in the first direction (the X-axis direction). Each of the first pocket parts 210 may include a lower accommodation space 220 for accommodation of the lower part of the battery cell assembly 100 corresponding thereto. Each of the first pocket parts 210 may have a U-shape when viewed in a cross-sectional view. Each of the first pocket parts 210 may include a bottom wall facing the lower surface of the corresponding battery cell assembly 100, and two lower side walls spaced apart from each other in the first direction (the X-axis direction) with the corresponding battery cell assembly 100 therebetween. One of the two lower side walls may continuously extend along a first edge of the bottom wall, and the other lower side wall may continuously extend along a second edge opposite the first edge of the bottom wall. When viewed in a plan view, the bottom wall may have a tetragonal shape. In each of the first pocket parts 210, the lower accommodation space 220 may be defined by the bottom wall and the two lower side walls. A length of the lower accommodation space 220 in the first direction (the X-axis direction) may be equal to a length of the bottom wall in the first direction (the X-axis direction), a length of the lower accommodation space 220 in the second direction (the Y-axis direction) may be equal to a length of the bottom wall in the second direction (the Y-axis direction), and a length (or depth) of the lower accommodation space 220 in the third direction (the Z-axis direction) may be equal to a length of the lower side walls in the third direction (the Z-axis direction).

The first connection part 230 may extend between two first pocket parts 210 that are adj acent to each other in the first direction (the X-axis direction) among the plurality of first pocket parts 210. For example, the first connection part 230 may extend from an upper end of one of the two first pocket parts 210 to an upper end of the other second pocket part 310 to physically connect the two first pocket parts 210. The first connection part 230 may have a tetragonal flat plate shape. The first connection part 230 may have a tetragonal shape when viewed in a plan view, and an upper surface of the first connection part 230 may be flat. The first connection part 230 may continuously extend from one end of the first pocket part 210 to another end of the first pocket part 210 in the second direction (the Y-axis direction), and a length of the first connection part 230 in the second direction (the Y-axis direction) may be the same or substantially the same as a length of the first pocket part 210 in the second direction (the Y-axis direction).

The first flange 240 may be connected to an outermost first pocket part 210 among the plurality of first pocket parts 210. For example, the lower case 200 may include one first flange 240 extending outward from a leftmost first pocket part 210 among the plurality of first pocket parts 210, and one first flange 240 extending outward from a rightmost first pocket part 210 among the plurality of first pocket parts 210. The first flange 240 may continuously extend in the second direction (the Y-axis direction) along an edge of a first pocket part 210 corresponding thereto. The first flange 240 may have a tetragonal flat plate shape. The first flange 240 may have a tetragonal shape when viewed in a plan view, and an upper surface of the first flange 240 may be flat. The first flange 240 may continuously extend from one end of the first pocket part 210 to another end of the first pocket part 210 in the second direction (the Y-axis direction), and a length of the first flange 240 in the second direction (the Y-axis direction) may be the same or substantially the same as a length of the first pocket part 210 in the second direction (the Y-axis direction).

The upper case 300 may be on the lower case 200. The upper case 300 may be coupled to the lower case 200 to cover a plurality of battery cell assemblies 100 on the lower case 200. The upper case 300 may include a plurality of upper accommodation spaces 320 for accommodation of the plurality of battery cell assemblies 100. Each of the upper accommodation spaces 320 may accommodate an upper part of a corresponding battery cell assembly 100 among the plurality of battery cell assemblies 100. The number of the upper accommodation spaces 320 of the upper case 300 may be the same as the number of battery cell assemblies 100, and the position of each of the upper accommodation spaces 320 may vertically overlap a corresponding lower accommodation space 220 among the plurality of lower accommodation spaces 220. In example embodiments, the upper case 300 may be a single piece and an overall material composition thereof may be the same. For example, in order to manufacture the upper case 300, a single flat plate may be prepared and press processing may be performed on the single flat plate to cause the single flat plate to have a predetermined structure.

The upper case 300 may include a plurality of second pocket parts 310, a second connection part 330, and a second flange 340. The plurality of second pocket parts 310, the second connection part 330, and the second flange 340 may be formed in one body.

The plurality of second pocket parts 310 may be spaced apart from each other in the first direction (the X-axis direction). Each of the second pocket parts 310 may include an upper accommodation space 320 for accommodation of the upper part of the battery cell assembly 100 corresponding thereto. Each of the second pocket parts 310 may include an upper wall facing the upper surface of the corresponding battery cell assembly 100, and two upper side walls spaced apart from each other in the first direction (the X-axis direction) with the corresponding battery cell assembly 100 therebetween. One of the two upper side walls may continuously extend along a first edge of the upper wall, and the other upper side wall may continuously extend along a second edge opposite the first edge of the upper wall. When viewed in a plan view, the upper wall may have a tetragonal shape. In each of the second pocket parts 310, the upper accommodation space 320 may be defined by the upper wall and the two upper side walls. A length of the upper accommodation space 320 in the first direction (the X-axis direction) may be equal to a length of the upper wall in the first direction (the X-axis direction), a length of the upper accommodation space 320 in the second direction (the Y-axis direction) may be equal to a length of the upper wall in the second direction (the Y-axis direction), and a length (or depth) of the upper accommodation space 320 in the third direction (the Z-axis direction) may be equal to a length of the upper side walls in the third direction (the Z-axis direction).

The second connection part 330 may extend between two second pocket parts 310 that are adjacent to each other in the first direction (the X-axis direction) among the plurality of second pocket parts 310. For example, the second connection part 330 may extend from a lower end of one of the two second pocket parts 310 to a lower end of the other second pocket part 310 to physically connect the two second pocket parts 310. The second connection part 330 may have a tetragonal flat plate shape. The second connection part 330 may have a tetragonal shape when viewed in a plan view, and a lower surface of the second connection part 330 may be flat. The second connection part 330 may continuously extend from one end of the second pocket part 310 to another end of the second pocket part 310 in the second direction (the Y-axis direction), and a length of the second connection part 330 in the second direction (the Y-axis direction) may be the same or substantially the same as a length of the second pocket part 310 in the second direction (the Y-axis direction). A lower surface of the second connection part 330 may be in surface contact with the upper surface of the first connection part 230. The first connection part 230 and the first connection part 230 may be in continuous or discontinuous contact with each other in the second direction (the Y-axis direction). The second connection part 330 may be coupled to the first connection part 230. The second connection part 330 may be coupled to the first connection part 230 to couple the upper case 300 to the lower case 200.

The second flange 340 may be connected to an outermost second pocket part 310 among the plurality of second pocket parts 310. For example, the upper case 300 may include one second flange 340 extending outward from a leftmost second pocket part 310 among the plurality of second pocket parts 310, and one second flange 340 extending outward from a rightmost second pocket part 310 among the plurality of second pocket parts 310. The second flange 340 may continuously extend in the second direction (the Y-axis direction) along an edge of the second pocket part 310 corresponding thereto. The second flange 340 may have a tetragonal flat plate shape. The second flange 340 may have a tetragonal shape when viewed in a plan view, and a lower surface of the second flange 340 may be flat. The second flange 340 may continuously extend from one end of the second pocket part 310 to another end of the second pocket part 310 in the second direction (the Y-axis direction), and a length of the second flange 340 in the second direction (the Y-axis direction) may be the same or substantially the same as the length of the second pocket part 310 in the second direction (the Y-axis direction). The second flange 340 and the first flange 240 may be in continuous or discontinuous contact with each other in the second direction (the Y-axis direction). A lower surface of the second flange 340 may be in surface contact with the upper surface of the first flange 240. The second flange 340 may be coupled to the first flange 240. The second flange 340 may be coupled to the first flange 240 to couple the upper case 300 to the lower case 200.

In example embodiments, the lower case 200 and the upper case 300 may be coupled to each other by welding. As shown in FIG. 5, a bonding layer 410, for example, a metal bonding layer containing a metal may be interposed between the lower case 200 and the upper case 300. The metal bonding layer may be a material layer formed by welding. In example embodiments, the bonding layer 410 may be interposed between the upper surface of the first connection part 230 of the lower case 200 and the lower surface of the second connection part 330 of the upper case 300, and the first connection part 230 may be bonded to the second connection part 330 by the bonding layer 410. At an interface between the first connection part 230 and the second connection part 330, the bonding layer 410 may extend continuously or discontinuously along the second direction (the Y-axis direction). In example embodiments, the bonding layer 410 may be interposed between the upper surface of the first flange 240 of the lower case 200 and the lower surface of the second flange 340 of the upper case 300, and the first flange 240 may be bonded to the second flange 340 by the bonding layer 410. At an interface between the first flange 240 and the second flange 340, the bonding layer 410 may extend continuously or discontinuously along the second direction (the Y-axis direction).

In example embodiments, the upper case 300 may include a cooling channel 311 configured to allow a cooling fluid to flow therethrough, and be configured to cool the battery cell assembly 100 so that the battery cell assembly 100 may have an appropriate operating temperature. The cooling channel 311 may be provided in each of the plurality of second pocket parts 310 of the upper case 300. For example, the cooling channel 311 may be provided in an upper wall and/or an upper side wall of each of the second pocket parts 310. The cooling fluid provided from the outside may flow into the cooling channel 311 through an inlet of the cooling channel 311, flow along the cooling channel 311, and be discharged to the outside through an outlet of the cooling channel 311. While the cooling fluid flows along the cooling channel 311, the battery cell assembly 100 may be cooled. In example embodiments, a thermally conductive adhesive layer may be interposed between the upper case 300 and the battery cell assembly 100 to improve thermal coupling between the upper case 300 and the battery cell assembly 100. The thermally conductive adhesive layer may include, for example, a thermal interface material (TIM). In this case, heat generated in the battery cell assembly 100 may be transferred to the upper case 300 through the thermally conductive adhesive layer.

According to example embodiments of the present disclosure, each of the upper case 300 and the lower case 200, which are structures for accommodating and supporting the plurality of battery cell assemblies 100, is configured as an integrated press product to simplify a manufacturing process of the battery module 10 and reduce manufacturing costs of the battery module 10. Because the plurality of battery cell assemblies 100 may be accommodated in the accommodation spaces provided by the upper case 300 and the lower case 200, the battery module 10 may be manufactured on a large scale.

In addition, according to example embodiments of the present disclosure, a bonding area between the lower case 200 and the upper case 300 is relatively large and thus a wide weldable area may be secured when a welding process is performed to couple the lower case 200 and the upper case 300. Accordingly, the manufacturing process of the battery module 10 may be facilitated.

### (Second Embodiment)

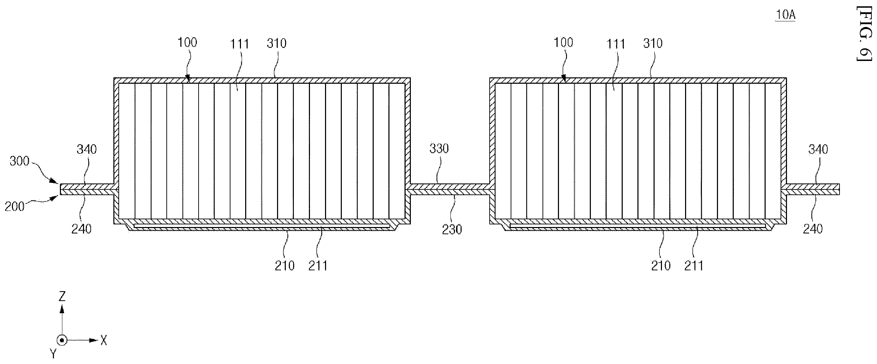

FIG. 6 is a cross-sectional view of a battery module 10A according to example embodiments of the present disclosure. Hereinafter, the battery module 10A of FIG. 6 will be described focusing on differences from the battery module 10 described above with reference to FIGS. 1 to 5.

Referring to FIG. 6, in the battery module 10A, a lower case 200 may include a cooling channel 211 configured to allow a cooling fluid to flow therethrough, and be configured to cool a battery cell assembly 100 so that the battery cell assembly 100 may have an appropriate operating temperature. The cooling channel 211 may be provided in each of a plurality of first pocket parts 210 of the lower case 200. For example, the cooling channel 211 may be provided in a lower wall and/or a lower side wall of each of the first pocket parts 210. The cooling fluid provided from the outside may flow into the cooling channel 211 through an inlet of the cooling channel 211, flow along the cooling channel 211, and be discharged to the outside through an outlet of the cooling channel 211. In example embodiments, a thermally conductive adhesive layer including a material such as the TIM may be interposed between the lower case 200 and the battery cell assembly 100 to improve thermal coupling between the lower case 200 and the battery cell assembly 100.

In example embodiments, both an upper case 300 and the lower case 200 may include the cooling channel 211. That is, the upper case 300 may include a cooling channel 311 therein as illustrated in FIG. 3, and the lower case 200 may include the cooling channel 211 as illustrated in FIG. 6.

### (Third Embodiment)

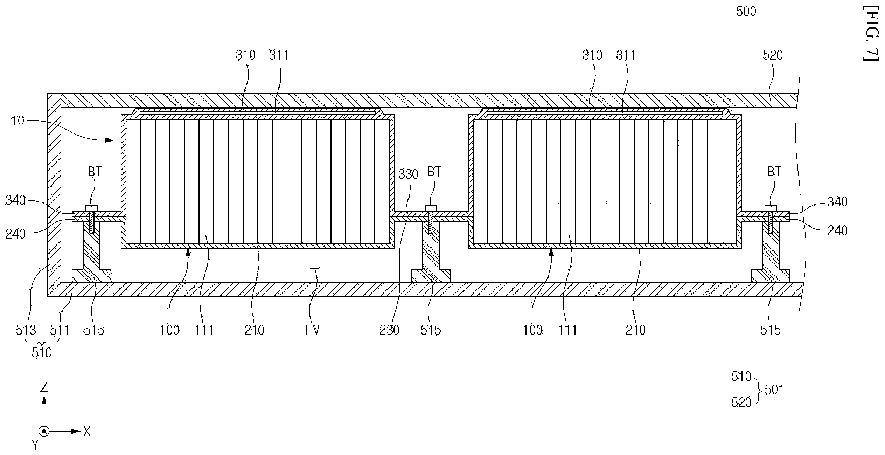

FIG. 7 is a cross-sectional view of a battery pack 500 according to example embodiments of the present invention.

Referring to FIG. 7, the battery pack 500 may include a pack housing 501 and a battery module 10 on the pack housing 501. The battery pack 500 may include one or more battery modules 10 on the pack housing 501. Although FIG. 7 illustrates that the battery pack 500 includes the battery module 10 described above with reference to FIGS. 1 to 5, embodiments are not limited thereto and the battery pack 500 may include the battery module 10A described above with reference to FIG. 6.

The pack housing 501 may include a lower housing 510 with an accommodation space for accommodation of the battery module 10, and a pack lid 520 coupled to the lower housing 510 to cover the lower housing 510 in which the battery module 10 is accommodated. The accommodation space of the lower housing 510 may be defined by a bottom plate 511 facing a lower surface of the battery module 10 and side walls 513 on edges of the bottom plate 511. A plurality of support structures 515 may be provided on the bottom plate 511 of the lower housing 510 to support the battery module 10. The plurality of support structures 515 may be spaced apart from each other in the first direction (the X-axis direction) and each extend in the second direction (the Y-axis direction). A length of each of the support structures 515 in the second direction (the Y-axis direction) may be equal to or greater than a length of the battery module 10 in the second direction (the Y-axis direction).

The battery module 10 may be mounted in the pack housing 501 in a side mounting manner. The plurality of support structures 515 each extending in the second direction (the Y-axis direction) may be provided on the bottom plate 511 of the pack housing 501, and the battery module 10 may be fastened to the plurality of support structures 515 by a fastening member such as a bolt BT.

More specifically, a first connection part 230 of a lower case 200 and a second connection part 330 of an upper case 300 may be combined to form a first assembly, and the first assembly may be disposed on a corresponding support structure 515 among the plurality of support structures 515 and fastened to the corresponding support structure 515 by the bolt BT. The support structure 515 may be in continuous contact with the first assembly in the second direction (the Y-axis direction). Because a contact area between the support structure 515 and the first assembly may be relatively large, the battery module 10 may be stably supported by the support structure 515.

In addition, a first flange 240 of the lower case 200 and a second flange 340 of the upper case 300 may be combined to form a second assembly, and the second assembly may be disposed on a corresponding support structure 515 among the plurality of support structures 515 and fastened to the corresponding support structure 515 by the bolt BT. The support structure 515 may be in continuous contact with the second assembly in the second direction (the Y-axis direction). Because a contact area between the support structure 515 and the second assembly may be relatively large, the battery module 10 may be stably supported by the support structure 515.

When the battery pack 500 is mounted in a vehicle, a cabin room in which a passenger rides may be located above the pack lid 520, and the ground on which the vehicle travels may be located below the lower housing 510.

The battery module 10 may be supported by the support structure 515 on the bottom plate 511 of the lower housing 510 in the side mounting method, and a free volume FV may be formed between the bottom plate 511 of the lower housing 510 and the battery module 10 as the bottom plate 511 of the lower housing 510 and the battery module 10 are spaced apart from each other in the third direction (the Z-axis direction). A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, the battery module 10 may be prevented from being damaged due to the impact. The free volume FV may be understood as an empty space between the battery module 10 and the lower housing 510. When the lower housing 510 is deformed toward the battery module 10 due to an impact applied to the lower part of the vehicle, the free volume FV may freely allow deformation of the lower housing 510 to some extent.

A height of the free volume FV and a distance between the bottom plate 511 of the lower housing 510 and the battery module 10 may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when a thickness or rigidity of the frames of the vehicle or the bottom plate 511 of the lower housing 510 is relatively large, at least one of the size and height of the free volume FV may be relatively reduced. When the thickness or rigidity of the frames of the vehicle or the bottom plate 511 of the lower housing 510 is relatively small, the bottom plate 511 of the lower housing 510 is highly likely to deform and thus at least one of the size and height of the free volume FV may be relatively increased to protect the battery module 10. When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom plate 511 of the lower housing 510 may be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a damage tolerance of the battery cell 111 included in the battery module 10. For example, when the damage tolerance of the battery cell 111 is 1 mm, the free volume FV may be determined to prevent the battery cell 111 from deforming by more than 1 mm when the lower housing 510 deforms and pressurizes a lower surface of the battery cell 111. In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, an upper surface of the battery module 10 may be in close contact with a lower side of the pack lid 520. In example embodiments, the battery module 10 may be supported while being hung from the pack lid 520. When there is a space between the battery modules 10 and the pack lid 520, a high-temperature gas may flow into the space between one of the battery modules 10 and the pack lid 520 during thermal runaway and heat and flames may propagate to adjacent battery modules 10 and also be transferred to the pack lid 520, and thus, the cabin room above the pack lid 520 may be influenced by the heat and the flames. Therefore, a gas or flames generated in the battery pack 500 may be guided to the free volume FV by bringing the upper surface of the battery module 10 and the lower surface of the pack lid 520 into close contact with each other.

According to example embodiments of the present invention, a contact area between the battery module 10 and the support structure 515 of the pack housing 501 is relatively large to disperse stress applied to coupling portions of the battery module 10 and the pack housing 501 and reduce damage to the coupling portions of the battery module 10 and the pack housing 501. Accordingly, the safety and reliability of the battery pack 500 may improve.

### (Fourth Embodiment)

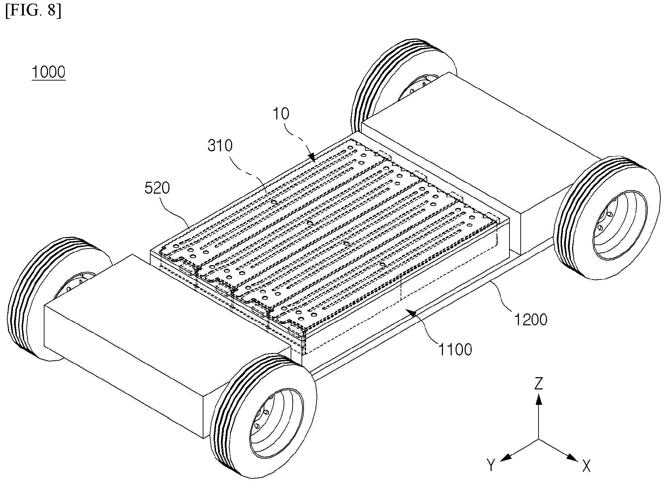

FIG. 8 is a schematic view of an electric vehicle 1000 in which a battery pack 1100 according to example embodiments of the present invention is mounted.

For the sake of simplicity, FIG. 8 illustrates only a vehicle body frame 1200 forming a lower frame of the electric vehicle 1000, and the battery pack 1100 and tires that are coupled to the vehicle body frame 1200. The battery pack 1100 may include the battery pack 500 described above with reference to FIG. 7.

In the case of a general battery pack, a battery module is installed at the bottom of a pack housing of the battery pack. In embodiments, the free volume FV (see FIG. 7) may be provided below the battery module 10 of the battery pack 1100, and there may be no space or a very narrow space between the battery module 10 and the pack lid 520. Accordingly, a gas generated in the battery module 10 may be prevented from being transferred to the cabin room corresponding to an upper part of the vehicle and be guided to the free volume FV between the battery module 10 and the pack housing 501 of the battery pack 1100. The gas may flow through the free volume FV to be discharged to a lower side of the electric vehicle 1000 through a gas exhaust installed in the battery pack 1100. In addition, according to the present embodiments, in the battery pack 1100, the free volume FV is provided between the battery module 10 and the pack housing to prevent the battery module 10 from being damaged regardless of the deformation of the pack housing 501.

According to embodiments of the present invention, the battery pack 1100 and the electric vehicle 1000 including the same are capable of increasing the safety of passengers. In addition, the battery module 10 that is a key component can be protected and the durabilities of the battery pack 1100 and the electric vehicle 1000 can be enhanced.

## Claims

1. A battery pack (500) comprising:
a pack housing (501), and
a battery module (10) in the pack housing (501),
wherein the battery module includes:
a plurality of battery cell assemblies (100) each including a plurality of battery cells (111);
a lower case (200) including a plurality of first pocket parts (210) spaced apart from each other in a first direction and a first connection part (230) extending between two adjacent first pocket parts (210) among the plurality of first pocket parts (210), wherein each of the plurality of first pocket parts (210) includes a lower accommodation space (220) for accommodation of a lower part of a corresponding battery cell assembly (100) among the plurality of battery cell assemblies (100) and the plurality of first pocket parts (210) and the first connection part (230) are integrally formed; and
an upper case (300) including a plurality of second pocket parts (310) spaced apart from each other in the first direction and a second connection part (330) extending between two adjacent second pocket parts (310) among the plurality of second pocket parts (310), wherein each of the plurality of second pocket parts (310) includes an upper accommodation space (320) for accommodation of an upper part of a corresponding battery cell assembly (100) among the plurality of battery cell assemblies (100) and the plurality of second pocket parts (310) and the second connection part (330) are integrally formed,
wherein the lower case (200) and the upper case (300) are coupled to each other by coupling the first connection part (230) and the second connection part (330),
**characterized in that**
the pack housing (501) includes a support structure (515) configured to support an assembly of the first connection part (230) and the second connection part (330), and
the battery module (10) is spaced apart from a bottom plate (511) of the pack housing (501), and a space (FV) is provided between the battery module (10) and the bottom plate (511) of the pack housing (501).

2. The battery pack (500) of claim 1, wherein
the first connection part (230) extends from one end of each of the first pocket parts (210) to another end of each of the first pocket parts (210) in a second direction crossing the first direction, and
the second connection part (330) extends from one end of each of the second pocket parts (310) to another end of each of the second pocket parts (310) in the second direction.

3. The battery pack (500) of claim 2, wherein
the first connection part (230) includes a flat upper surface,
the second connection part (330) includes a flat lower surface, and
the upper surface of the first connection part (230) is in contact with the lower surface of the second connection part (330).

4. The battery pack (500) of claim 1, further comprising
a bonding layer (410) between the first connection part (230) and the second connection part (330).

5. The battery pack (500) of claim 4, wherein
the bonding layer (410) includes a metal.

6. The battery pack (500) of claim 1, wherein
the lower case (200) further includes a first flange (240) extending from an outermost first pocket part (210) among the plurality of first pocket parts (210),
the upper case (300) further includes a second flange (340) extending from an outermost second pocket part among the plurality of second pocket parts (310), and
the first flange (240) is coupled to the second flange (340).

7. The battery pack (500) of claim 6, wherein
the first flange (240) extends from one end of the outermost first pocket part (210) to another end of the outermost first pocket part (210) in a second direction crossing the first direction,
the second flange (340) extends from one end of the outermost second pocket part to another end of the outermost second pocket part in the second direction,
the first flange (240) includes a flat upper surface,
the second flange (340) includes a flat lower surface, and
the upper surface of the first flange (240) is in contact with the lower surface of the second flange (340).

8. The battery pack (500) of claim 6, wherein
the first flange (240) and the second flange (340) are coupled to each other by a metal bonding layer (410).

9. The battery pack (500) of claim 1, wherein
each of the plurality of first pocket parts (210) includes a first cooling channel (211).

10. The battery pack (500) of claim 1, wherein
each of the plurality of second pocket parts (310) includes a second cooling channel (311).

11. The battery pack (500) of claim 1, wherein,
in each of the plurality of battery cell assemblies (100), the plurality of battery cells (111) are stacked in the first direction.

12. The battery pack (500) of claim 1, wherein
the lower case (200) further includes a first flange (240) extending from an outermost first pocket part (210) among the plurality of first pocket parts (210),
the upper case (300) further includes a second flange (340) extending from an outermost second pocket part among the plurality of second pocket parts (310),
the first flange (240) is coupled to the second flange (340), and
the pack housing (501) includes a support structure (515) configured to support an assembly of the first flange (240) and the second flange (340).

13. The battery pack of claim 1, wherein
the pack housing (501) includes a lower housing (510) with an accommodation space for accommodation of the battery module (10), a pack lid (520) coupled to the lower housing (510) to cover the lower housing (510) in which the battery module (10) is accommodated, wherein the accommodation space of the lower housing (510) is defined by the bottom plate (511) facing a lower surface of the battery module (10) and side walls (513) on edges of the bottom plate (511).

14. The battery pack of claim 13, wherein
an upper surface of the battery module (10) is in close contact with a lower side of the pack lid (520).

## Patentansprüche

1. Batteriepack (500), umfassend:
ein Packgehäuse (501); und
ein Batteriemodul (10) in dem Packgehäuse (501),
wobei das Batteriemodul umfasst:
eine Mehrzahl von Batteriezellenbaugruppen (100), die jeweils eine Mehrzahl von Batteriezellen (111) umfassen;
ein unteres Gehäuseteil (200), das eine Mehrzahl von ersten Taschenabschnitten (210), die in einer ersten Richtung voneinander beabstandet sind, und einen ersten Verbindungsabschnitt (230) umfasst, der sich zwischen zwei benachbarten ersten Taschenabschnitten (210) aus der Mehrzahl von ersten Taschenabschnitten (210) erstreckt, wobei jeder aus der Mehrzahl von ersten Taschenabschnitten (210) einen unteren Aufnahmeraum (220) zur Aufnahme eines unteren Teils einer entsprechenden Batteriezellenbaugruppe (100) aus der Mehrzahl von Batteriezellenbaugruppen (100) umfasst und die Mehrzahl von ersten Taschenabschnitten (210) und der erste Verbindungsabschnitt (230) einstückig ausgebildet sind; und
ein oberes Gehäuseteil (300), das eine Mehrzahl von zweiten Taschenabschnitten (310), die in der ersten Richtung voneinander beabstandet sind, und einen zweiten Verbindungsabschnitt (330) umfasst, der sich zwischen zwei benachbarten zweiten Taschenabschnitten (310) aus der Mehrzahl von zweiten Taschenabschnitten (310) erstreckt, wobei jeder aus der Mehrzahl von zweiten Taschenabschnitten (310) einen oberen Aufnahmeraum (320) zur Aufnahme eines oberen Teils einer entsprechenden Batteriezellenbaugruppe (100) aus der Mehrzahl von Batteriezellenbaugruppen (100) umfasst und die Mehrzahl von zweiten Taschenabschnitten (310) und der zweite Verbindungsabschnitt (330) einstückig ausgebildet sind,
wobei das untere Gehäuseteil (200) und das obere Gehäuseteil (300) durch Koppeln des ersten Verbindungsabschnitts (230) mit dem zweiten Verbindungsabschnitt (330) miteinander gekoppelt sind,
**dadurch gekennzeichnet, dass**
das Packgehäuse (501) eine Hilfsstruktur (515) umfasst, die dazu eingerichtet ist, eine Baugruppe aus dem ersten Verbindungsabschnitt (230) und dem zweiten Verbindungsabschnitt (330) zu stützen, und
das Batteriemodul (10) von einer Bodenplatte (511) des Packgehäuses (501) beabstandet ist und zwischen dem Batteriemodul (10) und der Bodenplatte (511) des Packgehäuses (501) ein Zwischenraum (FV) vorgesehen ist.

2. Batteriepack (500) nach Anspruch 1, wobei
sich der erste Verbindungsabschnitt (230) von einem Ende jedes der ersten Taschenabschnitte (210) zu einem anderen Ende jedes der ersten Taschenabschnitte (210) in einer zweiten Richtung erstreckt, die die erste Richtung kreuzt, und
sich der zweite Verbindungsabschnitt (330) von einem Ende jedes der zweiten Taschenabschnitte (310) zu einem anderen Ende jedes der zweiten Taschenabschnitte (310) in der zweiten Richtung erstreckt.

3. Batteriepack (500) nach Anspruch 2, wobei
der erste Verbindungsabschnitt (230) eine ebene obere Fläche umfasst,
der zweite Verbindungsabschnitt (330) eine ebene untere Fläche umfasst, und
die obere Fläche des ersten Verbindungsabschnitts (230) mit der unteren Fläche des zweiten Verbindungsabschnitts (330) in Kontakt steht.

4. Batteriepack (500) nach Anspruch 1, ferner umfassend
eine Verbindungsschicht (410) zwischen dem ersten Verbindungsabschnitt (230) und dem zweiten Verbindungsabschnitt (330).

5. Batteriepack (500) nach Anspruch 4, wobei
die Verbindungsschicht (410) ein Metall umfasst.

6. Batteriepack (500) nach Anspruch 1, wobei
das untere Gehäuseteil (200) ferner einen ersten Flansch (240) umfasst, der sich von einem äußersten ersten Taschenabschnitt (210) aus der Mehrzahl von ersten Taschenabschnitten (210) erstreckt,
das obere Gehäuseteil (300) ferner einen zweiten Flansch (340) umfasst, der sich von einem äußersten zweiten Taschenabschnitt aus der Mehrzahl von zweiten Taschenabschnitten (310) erstreckt, und
der erste Flansch (240) mit dem zweiten Flansch (340) gekoppelt ist.

7. Batteriepack (500) nach Anspruch 6, wobei
sich der erste Flansch (240) von einem Ende des äußersten ersten Taschenabschnitts (210) zu einem anderen Ende des äußersten ersten Taschenabschnitts (210) in einer zweiten Richtung erstreckt, welche die erste Richtung kreuzt,
sich der zweite Flansch (340) von einem Ende des äußersten zweiten Taschenabschnitts zu einem anderen Ende des äußersten zweiten Taschenabschnitts in der zweiten Richtung erstreckt,
der erste Flansch (240) eine ebene obere Fläche umfasst,
der zweite Flansch (340) eine ebene untere Fläche umfasst, und
die obere Fläche des ersten Flansches (240) mit der unteren Fläche des zweiten Flansches (340) in Kontakt steht.

8. Batteriepack (500) nach Anspruch 6, wobei
der erste Flansch (240) und der zweite Flansch (340) durch eine metallische Verbindungsschicht (410) miteinander gekoppelt sind.

9. Batteriepack (500) nach Anspruch 1, wobei
jeder aus der Mehrzahl von ersten Taschenabschnitten (210) einen ersten Kühlkanal (211) umfasst.

10. Batteriepack (500) nach Anspruch 1, wobei
jeder aus der Mehrzahl von zweiten Taschenabschnitten (310) einen zweiten Kühlkanal (311) umfasst.

11. Batteriepack (500) nach Anspruch 1, wobei
in jeder aus der Mehrzahl von Batteriezellenbaugruppen (100) die Mehrzahl von Batteriezellen (111) in der ersten Richtung gestapelt ist.

12. Batteriepack (500) nach Anspruch 1, wobei
das untere Gehäuseteil (200) ferner einen ersten Flansch (240) umfasst, der sich von einem äußersten ersten Taschenabschnitt (210) aus der Mehrzahl von ersten Taschenabschnitten (210) erstreckt,
das obere Gehäuseteil (300) ferner einen zweiten Flansch (340) umfasst, der sich von einem äußersten zweiten Taschenabschnitt aus der Mehrzahl von zweiten Taschenabschnitten (310) erstreckt,
der erste Flansch (240) mit dem zweiten Flansch (340) gekoppelt ist, und
das Packgehäuse (501) eine Hilfsstruktur (515) umfasst, die dazu eingerichtet ist, eine Baugruppe aus dem ersten Flansch (240) und dem zweiten Flansch (340) zu stützen.

13. Batteriepack nach Anspruch 1, wobei
das Packgehäuse (501) ein unteres Gehäuse (510) mit einem Aufnahmeraum zur Aufnahme des Batteriemoduls (10) und einen Packdeckel (520) umfasst, der mit dem unteren Gehäuse (510) gekoppelt ist, um das untere Gehäuse (510), in dem das Batteriemodul (10) aufgenommen ist, abzudecken, wobei der Aufnahmeraum des unteren Gehäuses (510) durch die Bodenplatte (511), die einer unteren Fläche des Batteriemoduls (10) zugewandt ist, und durch Seitenwände (513) an Rändern der Bodenplatte (511) definiert ist.

14. Batteriepack nach Anspruch 13, wobei
eine obere Fläche des Batteriemoduls (10) in engem Kontakt mit einer Unterseite des Packdeckels (520) steht.

## Revendications

1. Bloc-batterie (500), comprenant :
un boîtier de bloc (501), et
un module de batterie (10) dans le boîtier de bloc (501),
ledit module de batterie comprenant :
une pluralité d'ensembles de cellules de batterie (100) comprenant chacun une pluralité de cellules de batterie (111);
un boîtier inférieur (200) comprenant une pluralité de premières parties de poche (210) espacées les unes des autres dans une première direction et une première partie de connexion (230) s'étendant entre deux premières parties de poche adjacentes (210) parmi la pluralité de premières parties de poche (210), chaque partie de la pluralité de premières parties de poche (210) comprenant un espace de réception inférieur (220) pour recevoir une partie inférieure d'un ensemble de cellules de batterie correspondant (100) parmi la pluralité d'ensembles de cellules de batterie (100), et la pluralité de premières parties de poche (210) et la première partie de connexion (230) étant formées d'un seul tenant ; et
un boîtier supérieur (300) comprenant une pluralité de deuxièmes parties de poche (310) espacées les unes des autres dans la première direction et une deuxième partie de connexion (330) s'étendant entre deux deuxièmes parties de poche adjacentes (310) parmi la pluralité de deuxièmes parties de poche (310), chaque partie de la pluralité de deuxièmes parties de poche (310) comprenant un espace de réception supérieur (320) pour recevoir une partie supérieure d'un ensemble de cellules de batterie correspondant (100) parmi la pluralité d'ensembles de cellules de batterie (100), et la pluralité de deuxièmes parties de poche (310) et la deuxième partie de connexion (330) étant formées d'un seul tenant,
où le boîtier inférieur (200) et le boîtier supérieur (300) sont accouplés l'un à l'autre par raccordement de la première partie de connexion (230) et de la deuxième partie de connexion (330),
**caractérisé en ce que**
le boîtier de bloc (501) présente une structure de support (515) prévue pour supporter un ensemble de la première partie de connexion (230) et de la deuxième partie de connexion (330), et
le module de batterie (10) est espacé d'une plaque inférieure (511) du boîtier de bloc (501), et un espace (FV) est ménagé entre le module de batterie (10) et la plaque inférieure (511) du boîtier de bloc (501).

2. Bloc-batterie (500) selon la revendication 1, où
la première partie de connexion (230) s'étend d'une extrémité de chacune des premières parties de poche (210) à une autre extrémité de chacune des premières parties de poche (210) dans une deuxième direction croisant la première direction, et
la deuxième partie de connexion (330) s'étend d'une extrémité de chacune des deuxièmes parties de poche (310) à une autre extrémité de chacune des deuxièmes parties de poche (310) dans la deuxième direction.

3. Bloc-batterie (500) selon la revendication 2, où
la première partie de connexion (230) présente une surface supérieure plate,
la deuxième partie de connexion (330) présente une surface inférieure plate, et
la surface supérieure de la première partie de connexion (230) est en contact avec la surface inférieure de la deuxième partie de connexion (330).

4. Bloc-batterie (500) selon la revendication 1, comprenant en outre
une couche de liaison (410) entre la première partie de connexion (230) et la deuxième partie de connexion (330).

5. Bloc-batterie (500) selon la revendication 4, où la couche de liaison (410) comprend un métal.

6. Bloc-batterie (500) selon la revendication 1, où
le boîtier inférieur (200) présente en outre un premier rebord (240) s'étendant à partir d'une première partie de poche, la plus extérieure (210) parmi la pluralité de premières parties de poche (210),
le boîtier supérieur (300) présente en outre un deuxième rebord (340) s'étendant à partir d'une deuxième partie de poche, la plus extérieure parmi la pluralité de deuxièmes parties de poche (310), et
le premier rebord (240) est raccordé au deuxième rebord (340).

7. Bloc-batterie (500) selon la revendication 6, où
le premier rebord (240) s'étend d'une extrémité de la première partie de poche la plus extérieure (210) à une autre extrémité de la première partie de poche la plus extérieure (210) dans une deuxième direction croisant la première direction,
le deuxième rebord (340) s'étend d'une extrémité de la deuxième partie de poche la plus extérieure à une autre extrémité de la deuxième partie de poche la plus extérieure dans la deuxième direction,
le premier rebord (240) présente une surface supérieure plane,
le deuxième rebord (340) présente une surface inférieure plane, et
la surface supérieure du premier rebord (240) est en contact avec la surface inférieure du deuxième rebord (340).

8. Bloc-batterie (500) selon la revendication 6, où
le premier rebord (240) et le deuxième rebord (340) sont raccordés l'un à l'autre par une couche de liaison métallique (410).

9. Bloc-batterie (500) selon la revendication 1, où
chaque partie de la pluralité de premières parties de poche (210) présente un premier canal de refroidissement (211).

10. Bloc-batterie (500) selon la revendication 1, où
chaque partie de la pluralité de deuxièmes parties de poche (310) présente un deuxième canal de refroidissement (311).

11. Bloc-batterie (500) selon la revendication 1, où,
dans chaque ensemble de la pluralité d'ensembles de cellules de batterie (100), la pluralité de cellules de batterie (111) sont empilées dans la première direction.

12. Bloc-batterie (500) selon la revendication 1, où
le boîtier inférieur (200) présente en outre un premier rebord (240) s'étendant à partir d'une première partie de poche, la plus extérieure (210) parmi la pluralité de premières parties de poche (210),
le boîtier supérieur (300) présente en outre un deuxième rebord (340) s'étendant à partir d'une deuxième partie de poche, la plus extérieure parmi la pluralité de deuxièmes parties de poche (310),
le premier rebord (240) est raccordé au deuxième rebord (340), et
le boîtier de bloc (501) présente une structure de support (515) prévue pour supporter un ensemble du premier rebord (240) et du deuxième rebord (340).

13. Bloc-batterie selon la revendication 1, où
le boîtier de batterie (501) présente un boîtier inférieur (510) avec un espace de réception pour recevoir le module de batterie (10), un couvercle de bloc (520) raccordé au boîtier inférieur (510) pour recouvrir le boîtier inférieur (510) où le module de batterie (10) est reçu, l'espace de réception du boîtier inférieur (510) étant défini par la plaque inférieure (511) faisant face à une surface inférieure du module de batterie (10) et par des parois latérales (513) sur les bords de la plaque inférieure (511).

14. Bloc-batterie selon la revendication 13, où
une surface supérieure du module de batterie (10) est en contact étroit avec un côté inférieur du couvercle de bloc (520).
